# EUROPEAN PATENT APPLICATION

(11) **EP 4 806 858 A1**
(43) Date of publication of application: **16.09.2026**
(21) Application number: 24888699.6
(22) Date of filing: 05.11.2024
(51) Int. Cl.: C03C 3/32, C03C 4/10, G02B 1/00

(54) **INFRARED TRANSMISSIVE GLASS, OPTICAL ELEMENT, AND INFRARED CAMERA**

(30) Priority: 06.11.2023 JP 2023189541; 11.03.2024 JP 2024036608
(71) Applicant: Nippon Electric Glass Co., Ltd., Otsu-shi, Shiga 520-8639 (JP)
(72) Inventor: IWANAGA, Motoshi, Otsu-shi Shiga 520-8639 (JP); MATSUSHITA, Yoshimasa, Otsu-shi Shiga 520-8639 (JP); SATO, Fumio, Otsu-shi Shiga 520-8639 (JP)
(74) Representative: Tetzner, Michael
(86) International application number: PCT/JP2024/039290
(87) International publication number: WO 2025/100404

(57) **Abstract**

Provided are an infrared transmissive glass having an excellent infrared transmittance and a high refractive index, an optical element, and an infrared camera. An infrared transmissive glass containing, in atom%: 50% to 90% of S + Se + Te; 0.1% to 49.9% of Al + Ga; 0.1% to 49.9% of Si + Sn; 0% to 50% of S; 0% to 25% of Se; and 0% to less than 5% of Ge.

## Description

### TECHNICAL FIELD

The present invention relates to an infrared transmissive glass, an optical element, and an infrared camera.

### BACKGROUND ART

The development of an infrared camera used in in-vehicle night vision, security systems, and the like has been advanced. The infrared camera is designed by combining optical elements such as a filter and a lens that transmit infrared rays.

Materials such as germanium (Ge) and silicon (Si) are often used for the above optical elements. However, Ge is an expensive material and is disadvantageous for reducing the cost of the optical elements. In addition, Si has a lower light transmittance than that of Ge in an infrared region, which is disadvantageous in improving the performance of the infrared camera.

Therefore, various infrared transmissive glasses (chalcogenide glass) have been proposed as materials to replace Ge and Si (Patent Document 1).

### PRIOR ART DOCUMENT

### PATENT DOCUMENT

Patent Document 1: WO 2017/086227 A

### SUMMARY OF THE INVENTION

### PROBLEM TO BE SOLVED BY THE INVENTION

The optical elements such as a lens are often used by combining a plurality of materials having different optical constants to correct aberration. Therefore, an infrared transmissive material, particularly the chalcogenide glass, is required to have a high light transmittance and a high refractive index with respect to infrared rays from the viewpoint of improving the degree of freedom of aberration correction.

In view of the above, an object of the present invention is to provide an infrared transmissive glass having an excellent infrared transmittance and a high refractive index, an optical element, and an infrared camera.

### MEANS FOR SOLVING THE PROBLEM

Each aspect of an infrared transmissive glass, an optical element, and an infrared camera for solving the above problem will be described.

An infrared transmissive glass of aspect 1 contains, in atom%: 50% to 90% of S + Se + Te; 0.1% to 49.9% of Al + Ga; 0.1% to 49.9% of Si + Sn; 0% to 50% of S; 0% to 25% of Se; and 0% to less than 5% of Ge.

An infrared transmissive glass of aspect 2, according to aspect 1, preferably contains, in atom%, 20% or more of Te.

An infrared transmissive glass of aspect 3 contains, in atom%: 50% to 90% of Te; 0.1% to 49.9% of Al + Ga; 0.1% to 49.9% of Si + Sn; 0% to 50% of S; 0% to 25% of Se; and 0% to less than 5% of Ge.

An infrared transmissive glass of aspect 4, according to any one of aspects 1 to 3, preferably contains, in atom%, 0.1% to less than 15% of Al.

An infrared transmissive glass of aspect 5, according to any one of aspects 1 to 4, preferably contains 0.1% to 49.9% of Si.

An infrared transmissive glass of aspect 6, according to any one of aspects 1 to 5, preferably contains, in atom%, 0% to 40% of Ag.

An infrared transmissive glass of aspect 7, according to any one of aspects 1 to 6, preferably contains, in atom%, 0% to 40% of Cl + Br + I.

An infrared transmissive glass of aspect 8, according to any one of aspects 1 to 7, (Al + Ga)/(S + Se + Te) is preferably 0.01 to less than 1.

An infrared transmissive glass of aspect 9, according to any one of aspects 1 to 8, (Si + Sn)/(S + Se + Te) is preferably 0.01 to less than 1.

An optical element of aspect 10 preferably contains the infrared transmissive glass according to any one of aspects 1 to 9.

An infrared camera of aspect 11 preferably contains the optical element according to aspect 10.

### EFFECT OF THE INVENTION

According to the present invention, it is possible to provide an infrared transmissive glass having an excellent infrared transmittance and a high refractive index, an optical element, and an infrared camera.

### MODE FOR CARRYING OUT THE INVENTION

An infrared transmissive glass according to the present invention contains, in atom%: 50% to 90% of S + Se + Te; 0.1% to 49.9% of Al + Ga; 0.1% to 49.9% of Si + Sn; 0% to 50% of S; 0% to 25% of Se; and 0% to less than 5% of Ge. The infrared transmissive glass according to the present invention contains, in atom%: 50% to 90% of Te; 0.1% to 49.9% of Al + Ga; 0.1% to 49.9% of Si + Sn; 0% to 50% of S; 0% to 25% of Se; and 0% to less than 5% of Ge. The reason why the glass composition is defined as described above and the content of each component will be described below. In the following description, "%" means "atom%" unless otherwise specified. In the present invention, "x + y + z + ..." means the total amount of the contents of the respective components. Here, each component is not necessarily contained as an essential component, and a component that is not contained (content: 0%) may be present. "x + y + z + ... A% to B%" includes, for example, a case of "x = 0%, y + z + ... A% to B%" and a case of "x = 0%, y = 0%, z + ... A% to B%".

S, Se, and Te are components forming a glass skeleton. The content of S + Se + Te (total amount of S, Se, and Te) is 50% to 90%. More specifically, the lower limit of the content of S + Se + Te is 50% or more, preferably 55% or more, particularly preferably 60% or more. The upper limit of the content of S + Se + Te is 90% or less, preferably 88% or less, particularly preferably 85% or less. When the content of S + Se + Te is too small, vitrification hardly occurs. When the content of S + Se + Te is too large, crystals of an S system, a Se system, or a Te system are precipitated, and a light transmittance easily decreases. The preferred range of the content of each component is as follows.

S is a component forming the glass skeleton, but is also a component easily reducing a light transmittance at a wavelength of 10 µm or more. Therefore, from the viewpoint of improving the light transmittance in an infrared range, the content of S is 0% to 50%, preferably 40% or less, 30% or less, 20% or less, 10% or less, 5% or less. Particularly preferably, the infrared transmissive glass is substantially free of S. In the present specification, "substantially free of" means that no components are deliberately contained in raw materials, and is not intended to exclude even the incorporation thereof in an impurity level. The content of each component is objectively less than 0.1%.

Se is a component forming the glass skeleton, but is also a highly toxic component. Therefore, from the viewpoint of reducing the load on the environment, the content of Se is 0% to 25%, preferably 20% or less, 10% or less. Particularly preferably, the infrared transmissive glass is substantially free of Se.

Te is a component forming the glass skeleton, and is a component having a high effect of increasing the light transmittance particularly in a wavelength range of 10 µm or more. The content of Te is preferably 0% to 90%. More specifically, the lower limit of the content of Te is preferably 0% or more, 10% or more, 20% or more, 30% or more, 40% or more, particularly preferably 50% or more. The upper limit of the content of Te is preferably 90% or less, 88% or less, particularly preferably 85% or less. The lower limit of the content of Te is preferably more than 50%, particularly preferably 60% or more, from the viewpoint of increasing the light transmittance particularly in a wavelength range of 15 µm or more.

Al and Ga are components easily forming the glass skeleton. The content of Al + Ga (total amount of Al and Ga) is 0.1% to 49.9%. More specifically, the lower limit of the content of Al + Ga is 0.1% or more, preferably 1% or more, 2% or more, particularly preferably 3% or more, and the upper limit of the content of Al + Ga is 49.9% or less, preferably 40% or less, 30% or less, 20% or less, particularly preferably 15% or less. When the content of Al + Ga is too small, vitrification hardly occurs. When the content of Al + Ga is too large, an internal transmittance easily decreases. The preferred range of the content of each component is as follows.

Al is a component easily forming the glass skeleton, and is also a component easily highly dispersing glass by reducing the Abbe number. When Al is contained simultaneously with Si, light absorption due to Si oxidation impurities is easily suppressed. The content of Al is preferably 0% to 49.9%, and more preferably 0.1% to less than 15%. More specifically, the lower limit of the content of Al is preferably 0% or more, 0.1% or more, 1% or more, particularly preferably 2% or more. The upper limit of the content of Al is preferably 49.9% or less, 40% or less, 30% or less, 20% or less, 15% or less, less than 15%, 10% or less, 8% or less, 7% or less, 5% or less, particularly preferably 4% or less. When the content of Al is too large, the internal transmittance easily decreases.

Ga is a component easily forming the glass skeleton, and is also a component easily suppressing a decrease in the light transmittance at a wavelength of 10 µm or more. The content of Ga is preferably 0% to 49.9%. More specifically, the lower limit of the content of Ga is preferably 0% or more, 0.1% or more, 1% or more, particularly preferably 2% or more, and the upper limit of the content of Ga is preferably 49.9% or less, 40% or less, 30% or less, 20% or less, 15% or less, less than 15%, particularly preferably 10% or less. When the content of Ga is too large, vitrification rather hardly occurs.

(Al + Ga)/(S + Se + Te) is preferably 0.01 to less than 1. More specifically, the lower limit of (Al + Ga)/(S + Se + Te) is preferably 0.01 or more, particularly preferably 0.03 or more, and the upper limit of (Al + Ga)/(S + Se + Te) is preferably less than 1, 0.8 or less, 0.5 or less, particularly preferably 0.3 or less. When (Al + Ga)/(S + Se + Te) satisfies the above value, vitrification easily occurs. Note that "(Al + Ga)/(S + Se + Te)" means a value obtained by dividing the total amount of Al and Ga by the total amount of S, Se, and Te.

Si and Sn are components forming the glass skeleton. The content of Si + Sn (total amount of Si and Sn) is 0.1% to 49.9%. More specifically, the lower limit of the content of Si + Sn is preferably 0.1% or more, 1% or more, 2% or more, particularly preferably 5% or more, and the upper limit of the content of Si + Sn is preferably 49.9% or less, 40% or less, 30% or less, 25% or less, 22% or less, particularly preferably 20% or less. When the content of Si + Sn is too small, vitrification hardly occurs. When the content of Si + Sn is too large, the internal transmittance easily decreases. The preferred range of the content of each component is as follows. Among Si and Sn, Si particularly easily forming the glass skeleton is preferably contained.

Si is a component particularly easily forming the glass skeleton, and is also a component easily highly dispersing glass by reducing the Abbe number. The content of Si is preferably 0% to 49.9%. More specifically, the lower limit of the content of Si is preferably 0% or more, 0.1% or more, 1% or more, 2% or more, 5% or more, 8% or more, particularly preferably 10% or more, and the upper limit of the content of Si is preferably 49.9% or less, 40% or less, 30% or less, 25% or less, 22% or less, particularly preferably 20% or less. When the content of Si is too large, the internal transmittance easily decreases.

Sn is a component easily forming the glass skeleton, and is also a component easily increasing a refractive index. The content of Sn is preferably 0% to 49.9%. More specifically, the lower limit of the content of Sn is preferably 0% or more, 0.1% or more, 1% or more, particularly preferably 2% or more, and the upper limit of the content of Sn is preferably 49.9% or less, 40% or less, 30% or less, 20% or less, particularly preferably 15% or less. When the content of Sn is too large, the internal transmittance easily decreases.

(Si + Sn)/(S + Se + Te) is preferably 0.01 to less than 1. More specifically, the lower limit of (Si + Sn)/(S + Se + Te) is preferably 0.01 or more, 0.05 or more, particularly preferably 0.1 or more, and the upper limit of (Si + Sn)/(S + Se + Te) is preferably less than 1, 0.5 or less, particularly preferably 0.3 or less. When (Si + Sn)/(S + Se + Te) satisfies the above value, vitrification easily occurs. The "(Si + Sn)/(S + Se + Te)" means a value obtained by dividing the total amount of Si and Sn by the total amount of S, Se, and Te.

Ge is a component easily forming the glass skeleton, and is also a component easily increasing the temperature coefficient of the refractive index. The raw material cost easily increases. Therefore, the content of Ge is 0% to less than 5%, preferably 3% or less, 1% or less. Particularly preferably, the infrared transmissive glass is substantially free of Ge.

From the viewpoint of obtaining desired optical characteristics, the lower limit of the content of S + Se + Te + Al + Ga + Si + Sn (total amount of S, Se, Te, Al, Ga, Si, and Sn) is preferably 50.2% or more, 51% or more, 60% or more, 70% or more, 80% or more, particularly preferably 85% or more. The upper limit of the content of S + Se + Te + Al + Ga + Si + Sn is not particularly limited, but may be 100% or less, 99% or less, 98% or less, particularly 95% or less, from the viewpoint of containing an optional component.

The infrared transmissive glass of the present invention may contain the following optional components.

In is a component easily increasing the refractive index. The content of In is preferably 0% to 49.8%. More specifically, the lower limit of the content of In is preferably 0% or more, 0.1% or more, particularly preferably 1% or more, and the upper limit of the content of In is preferably 49.8% or less, 45% or less, 40% or less, 30% or less, 20% or less, 10% or less, particularly preferably 5% or less. When the content of In is too large, vitrification hardly occurs.

Ag is also a component enhancing the stability of glass and easily suppressing the decrease in the light transmittance at a wavelength of 10 µm or more. The content of Ag is preferably 0% to 40%. More specifically, the lower limit of the content of Ag is preferably 0% or more, 0.1% or more, 1% or more, particularly preferably 2% or more, and the upper limit of the content of Ag is preferably 40% or less, 30% or less, 20% or less, 15% or less, particularly preferably 10% or less. When the content of Ag is too large, vitrification hardly occurs.

Cl, Br, and I are components widening the vitrification range and easily enhancing the thermal stability of glass. The lower limit of the content of Cl + Br + I (total amount of Cl, Br, and I) is preferably 0% or more, 1% or more, particularly preferably 2% or more, and the upper limit of the content of Cl + Br + I is preferably 40% or less, 20% or less, 15% or less, particularly preferably 10% or less. When the content of Cl + Br + I is too large, vitrification hardly occurs. In addition, weather resistance easily decreases. The lower limits of the respective contents of Cl, Br, and I components are preferably 0% or more, 1% or more, particularly preferably 2% or more, and the upper limits of the respective contents of Cl, Br, and I components are preferably 20% or less, 15% or less, particularly preferably 10% or less.

Bi is a component easily increasing the refractive index. The content of Bi is preferably 0% to 49.8%. More specifically, the lower limit of the content of Bi is preferably 0% or more, 0.1% or more, 1% or more, particularly preferably 2% or more, and the upper limit of the content of Bi is preferably 49.8% or less, 45% or less, 40% or less, 30% or less, 20% or less, particularly preferably 15% or less. When the content of Bi is too large, vitrification hardly occurs.

Sb is a component easily forming the glass skeleton, and is also a component easily increasing the refractive index. The content of Sb is preferably 0% to 49.8%. More specifically, the lower limit of the content of Sb is preferably 0% or more, 0.1% or more, 1% or more, particularly preferably 2% or more, and the upper limit of the content of Sb is preferably 49.8% or less, 45% or less, 40% or less, 30% or less, 20% or less, 15% or less, 10% or less, particularly preferably 5% or less. When the content of Sb is too large, vitrification hardly occurs.

Zn and Cu are components expanding the vitrification range and easily enhancing the thermal stability of glass. The content of Zn + Cu (the total amount of Zn and Cu) is preferably 0% to 49.8%. More specifically, the lower limit of the content of Zn + Cu is preferably 0% or more, 0.1% or more, particularly preferably 1% or more, and the upper limit of the content of Zn + Cu is preferably 49.8% or less, 45% or less, 40% or less, 30% or less, 20% or less, 10% or less, particularly preferably 5% or less. When the content of Zn + Cu is too large, vitrification hardly occurs. The respective contents of Zn and Cu components are preferably 0% or more, 0.1% or more, and particularly preferably 1% or more, and the upper limits of the respective contents of Zn and Cu components are preferably 49.8% or less, 45% or less, 40% or less, 30% or less, 20% or less, 10% or less, particularly preferably 5% or less.

The infrared transmissive glass of the present invention may contain B, C, Cr, Mn, Ti, Fe, or the like. The content of B + C + Cr + Mn + Ti + Fe (total amount of B, C, Cr, Mn, Ti, and Fe) is preferably 0% to 40%. More specifically, the upper limit of the content of B + C + Cr + Mn + Ti + Fe is preferably 40% or less, 30% or less, 20% or less, 10% or less, 5% or less, 1% or less, particularly preferably less than 1%. When the content of these components is too large, it may be difficult to obtain desired optical characteristics. The lower limit of the content of B + C + Cr + Mn + Ti + Fe is not particularly limited, but may be 0% or more, 0.1% or more. The upper limits of the respective contents of B, C, Cr, Mn, Ti, and Fe components are preferably 40% or less, 30% or less, 20% or less, 10% or less, 5% or less, 1% or less, particularly preferably less than 1%, and the lower limits of the respective contents of B, C, Cr, Mn, Ti, and Fe components are not particularly limited, but may be 0% or more, 0.1% or more.

As is a component enhancing the thermal stability of glass. However, since As is a toxic component, the content of As is preferably 0% to 30%, 25% or less, 20% or less, 10% or less, 5% or less, from the viewpoint of reducing the load on the environment. Particularly preferably, the infrared transmissive glass is substantially free of As.

It is preferable that Cd, Tl, and Pb are not substantially contained. In this way, the influence on the environmental aspect can be minimized.

The infrared transmissive glass of the present invention preferably has a refractive index (n10) of 2.3 or more, particularly preferably 2.5 or more at 25°C and a wavelength of 10 µm. By using the infrared transmissive glass having the refractive index, it is possible to manufacture an optical element having a relatively high refractive index in an infrared wavelength region. The upper limit of the refractive index is not particularly limited, but is practically 4 or less, particularly 3.5 or less.

In the infrared transmissive glass of the present invention, the temperature coefficient (dn/dT) of the refractive index is preferably 300×10⁻⁶ or less, 200×10⁻⁶ or less, particularly preferably 100×10⁻⁶ or less. Here, the temperature coefficient of the refractive index means the slope of the change amount of the refractive index (n10) at a wavelength of 10 µm at a temperature of -40 to 80°C. By using the infrared transmissive glass having the temperature coefficient of the refractive index, it is possible to manufacture an optical element having a small refractive index change amount in the infrared wavelength region with respect to the temperature change. The lower limit of the temperature coefficient of the refractive index is not particularly limited, but is practically 1×10⁻⁶ or more, particularly 10×10⁻⁶ or more.

The infrared transmissive glass of the present invention preferably has the Abbe number (ν10) at a wavelength of 10 µm of 250 or less, 240 or less, particularly preferably 230 or less. By using the infrared transmissive glass having the Abbe number, it is possible to manufacture an optical element exhibiting relatively high dispersion in the infrared wavelength region. The lower limit of the Abbe number is not particularly limited, but is practically 100 or more.

The infrared transmissive glass of the present invention preferably has an infrared absorption edge wavelength of 15 µm or more, particularly preferably 18 µm or more. As the infrared absorption edge wavelength is larger, infrared rays on a longer wavelength side can be transmitted. Here, the infrared absorption edge wavelength means a wavelength on the longest wavelength side where the light transmittance is 10% at a thickness of 2 mm in an infrared region having a wavelength of 1 µm or more.

Since the infrared transmissive glass of the present invention has an excellent infrared transmittance and a high refractive index, the infrared transmissive glass is preferably used for an optical element such as a filter or a lens used for an infrared sensor, an infrared camera, or the like. In other words, the optical element of the present invention preferably includes the above-described infrared transmissive glass. The infrared camera of the present invention preferably includes the above-described optical element.

The infrared transmissive glass of the present invention can be produced, for example, as follows. First, raw materials are prepared so as to have a desired composition. Next, the prepared raw materials are put into a quartz glass ampoule that has been evacuated while being heated, and sealed with an oxygen burner while being evacuated. Next, the sealed quartz glass ampoule is held at about 650°C to 1000°C for 6 hours to 12 hours. Thereafter, the infrared transmissive glass can be obtained by rapidly cooling to room temperature.

As the raw materials, element raw materials (Ga, Si, Te, Ag, I, etc.) may be used, or compound raw materials (Ga₂Te₃, AgI, etc.) may be used. These may be used in combination.

The optical element can be produced by processing the obtained infrared transmissive glass into a predetermined shape (disc shape, lens shape, etc.).

For the purpose of improving the transmittance, an antireflection film may be formed on one surface or both surfaces of the optical element. Examples of a method for forming the antireflection film include a vacuum vapor deposition method, an ion plating method, and a sputtering method.

After the antireflection film is formed on the infrared transmissive glass, the infrared transmissive glass may be processed into a predetermined shape. However, since the antireflection film is easily peeled off in the processing step, it is preferable to form the antireflection film after processing the infrared transmissive glass into a predetermined shape unless there is a special circumstance.

### EXAMPLES

Hereinafter, the present invention will be described based on Examples, but the present invention is not limited to these Examples.

Tables 1 to 12 show Examples 1 to 103 of the present invention.

**[Table 1]**

| (atom%) | Example | | | | | | | | |
|---|---|---|---|---|---|---|---|---|---|
| | 1 | 2 | 3 | 4 | 5 | 6 | 7 | 8 | 9 |
| S | 0 | 0 | 0 | 0 | 0 | 0 | 0 | 0 | 0 |
| Se | 0 | 0 | 0 | 0 | 0 | 0 | 0 | 0 | 0 |
| Te | 75.2 | 80.9 | 70.8 | 81.6 | 75.2 | 73 | 68.9 | 78.4 | 78.4 |
| Al | 6.8 | 4 | 10 | 4.1 | 3.8 | 3.7 | 3.4 | 7.8 | 7.8 |
| Ga | 0 | 0 | 0 | 0 | 0 | 0 | 0 | 0 | 0 |
| Si | 13.6 | 8.1 | 14.2 | 12.3 | 15 | 18.3 | 20.7 | 7.8 | 11.8 |
| Sn | 0 | 0 | 0 | 0 | 0 | 0 | 0 | 0 | 0 |
| Ge | 0 | 0 | 0 | 0 | 0 | 0 | 0 | 0 | 0 |
| In | 0 | 0 | 0 | 0 | 0 | 0 | 0 | 0 | 0 |
| Ag | 4.4 | 7 | 5 | 2 | 6 | 5 | 7 | 6 | 2 |
| Cl | 0 | 0 | 0 | 0 | 0 | 0 | 0 | 0 | 0 |
| Br | 0 | 0 | 0 | 0 | 0 | 0 | 0 | 0 | 0 |
| I | 0 | 0 | 0 | 0 | 0 | 0 | 0 | 0 | 0 |
| S+Se+Te | 75.2 | 80.9 | 70.8 | 81.6 | 75.2 | 73 | 68.9 | 78.4 | 78.4 |
| Al+Ga | 6.8 | 4 | 10 | 4.1 | 3.8 | 3.7 | 3.4 | 7.8 | 7.8 |
| Si+Sn | 13.6 | 8.1 | 14.2 | 12.3 | 15 | 18.3 | 20.7 | 7.8 | 11.8 |
| Cl+Br+I | 0 | 0 | 0 | 0 | 0 | 0 | 0 | 0 | 0 |
| S+Se+Te+Al+Ga+Si+Sn | 95.6 | 93 | 95 | 98 | 94 | 95 | 93 | 94 | 98 |
| (Al+Ga)/(S+Se+Te) | 0.09 | 0.05 | 0.14 | 0.05 | 0.05 | 0.05 | 0.05 | 0.10 | 0.10 |
| (Si+Sn)/(S+Se+Te) | 0.18 | 0.10 | 0.20 | 0.15 | 0.20 | 0.25 | 0.30 | 0.10 | 0.15 |
| Infrared absorption edge wavelength(*µ* m) | 18.3 | 18.9 | 18.9 | 18.4 | 18.2 | 18.3 | 18.1 | 18.3 | 18.3 |
| Refractive index n₁₀ | 3.095 | 3.275 | 3.013 | 3.184 | 3.13 | 3.062 | 3.015 | 3.198 | 3.113 |
| dn/dT (× 10⁻⁶) | 80 | 86 | 75 | 87 | 80 | 77 | 73 | 83 | 83 |

**[Table 2]**

| (atom%) | Example | | | | | | | | |
|---|---|---|---|---|---|---|---|---|---|
| | 10 | 11 | 12 | 13 | 14 | 15 | 16 | 17 | 18 |
| S | 0 | 0 | 0 | 0 | 0 | 0 | 0 | 0 | 0 |
| Se | 0 | 0 | 0 | 0 | 0 | 0 | 0 | 0 | 0 |
| Te | 77.7 | 69.3 | 71.8 | 70 | 77.6 | 75.4 | 73.3 | 67.8 | 62.8 |
| Al | 5.2 | 6.9 | 7.2 | 7 | 11.6 | 11.3 | 11 | 10.2 | 9.4 |
| Ga | 0 | 0 | 0 | 0 | 0 | 0 | 0 | 0 | 0 |
| Si | 12.5 | 13.8 | 18 | 21 | 7.8 | 11.3 | 14.7 | 17 | 18.8 |
| Sn | 0 | 0 | 0 | 0 | 0 | 0 | 0 | 0 | 0 |
| Ge | 0 | 0 | 0 | 0 | 0 | 0 | 0 | 0 | 0 |
| In | 0 | 0 | 0 | 0 | 0 | 0 | 0 | 0 | 0 |
| Ag | 4.6 | 10 | 3 | 2 | 3 | 2 | 1 | 5 | 9 |
| Cl | 0 | 0 | 0 | 0 | 0 | 0 | 0 | 0 | 0 |
| Br | 0 | 0 | 0 | 0 | 0 | 0 | 0 | 0 | 0 |
| I | 0 | 0 | 0 | 0 | 0 | 0 | 0 | 0 | 0 |
| S+Se+Te | 77.7 | 69.3 | 71.8 | 70 | 77.6 | 75.4 | 73.3 | 67.8 | 62.8 |
| Al+Ga | 5.2 | 6.9 | 7.2 | 7 | 11.6 | 11.3 | 11 | 10.2 | 9.4 |
| Si+Sn | 12.5 | 13.8 | 18 | 21 | 7.8 | 11.3 | 14.7 | 17 | 18.8 |
| Cl+Br+I | 0 | 0 | 0 | 0 | 0 | 0 | 0 | 0 | 0 |
| S+Se+Te+Al+Ga+Si+Sn | 95.4 | 90 | 97 | 98 | 97 | 98 | 99 | 95 | 91 |
| (Al+Ga)/(S+Se+Te) | 0.07 | 0.10 | 0.10 | 0.10 | 0.15 | 0.15 | 0.15 | 0.15 | 0.15 |
| (Si+Sn)/(S+Se+Te) | 0.16 | 0.20 | 0.25 | 0.30 | 0.10 | 0.15 | 0.20 | 0.25 | 0.30 |
| Infrared absorption edge wavelength(*µ*m) | 18.3 | 18.3 | 18.4 | 18.4 | 18.5 | 18.2 | 18.8 | 18.7 | 18.9 |
| Refractive index n₁₀ | 3.154 | 3.087 | 2.992 | 2.93 | 3.117 | 3.047 | 2.981 | 2.949 | 2.925 |
| dn/dT (×10⁻⁶) | 82 | 74 | 76 | 74 | 82 | 80 | 78 | 72 | 67 |

**[Table 3]**

| (atom%) | Example | | | | | | | | |
|---|---|---|---|---|---|---|---|---|---|
| | 19 | 20 | 21 | 22 | 23 | 24 | 25 | 26 | 27 |
| S | 0 | 0 | 0 | 0 | 0 | 0 | 0 | 0 | 0 |
| Se | 0 | 0 | 0 | 0 | 0 | 0 | 0 | 0 | 0 |
| Te | 70.7 | 68.9 | 67.2 | 64.8 | 64.7 | 73.8 | 83.3 | 80 | 77 |
| Al | 14.2 | 13.8 | 13.4 | 13 | 12.9 | 5.1 | 4.2 | 4 | 3.8 |
| Ga | 0 | 0 | 0 | 0 | 0 | 3.8 | 0 | 0 | 0 |
| Si | 7.1 | 10.3 | 13.4 | 16.2 | 19.4 | 12.8 | 8.5 | 15 | 15.2 |
| Sn | 0 | 0 | 0 | 0 | 0 | 0 | 0 | 0 | 0 |
| Ge | 0 | 0 | 0 | 0 | 0 | 0 | 4 | 1 | 4 |
| In | 0 | 0 | 0 | 0 | 0 | 0 | 0 | 0 | 0 |
| Ag | 8 | 7 | 6 | 6 | 3 | 4.5 | 0 | 0 | 0 |
| Cl | 0 | 0 | 0 | 0 | 0 | 0 | 0 | 0 | 0 |
| Br | 0 | 0 | 0 | 0 | 0 | 0 | 0 | 0 | 0 |
| I | 0 | 0 | 0 | 0 | 0 | 0 | 0 | 0 | 0 |
| S+Se+Te | 70.7 | 68.9 | 67.2 | 64.8 | 64.7 | 73.8 | 83.3 | 80 | 77 |
| Al+Ga | 14.2 | 13.8 | 13.4 | 13 | 12.9 | 8.9 | 4.2 | 4 | 3.8 |
| Si+Sn | 7.1 | 10.3 | 13.4 | 16.2 | 19.4 | 12.8 | 8.5 | 15 | 15.2 |
| Cl+Br+I | 0 | 0 | 0 | 0 | 0 | 0 | 0 | 0 | 0 |
| S+Se+Te+Al+Ga+Si+Sn | 92 | 93 | 94 | 94 | 97 | 95.5 | 96 | 99 | 96 |
| (Al+Ga)/(S+Se+Te) | 0.20 | 0.20 | 0.20 | 0.20 | 0.20 | 0.12 | 0.05 | 0.05 | 0.05 |
| (Si+Sn)/(S+Se+Te) | 0.10 | 0.15 | 0.20 | 0.25 | 0.30 | 0.17 | 0.10 | 0.19 | 0.20 |
| Infrared absorption edge wavelength(*µ*m) | 18.9 | 18.9 | 18.8 | 18.2 | 18.2 | 19.0 | 18.6 | 18.9 | 18.1 |
| Refractive index n₁₀ | 3.077 | 3.015 | 2.955 | 2.904 | 2.836 | 3.067 | 3.176 | 3.104 | 3.037 |
| dn/dT (× 10⁻⁶) | 75 | 73 | 71 | 69 | 69 | 78 | 165 | 99 | 128 |

**[Table 4]**

| (atom%) | Example | | | | | | | | |
|---|---|---|---|---|---|---|---|---|---|
| | 28 | 29 | 30 | 31 | 32 | 33 | 34 | 35 | 36 |
| S | 0 | 0 | 0 | 0 | 0 | 0 | 0 | 0 | 0 |
| Se | 0 | 0 | 0 | 0 | 0 | 0 | 0 | 0 | 0 |
| Te | 80 | 76.9 | 74.1 | 77 | 74.1 | 71.4 | 83.3 | 80 | 77 |
| Al | 8 | 7.7 | 7.4 | 11.5 | 11.1 | 10.7 | 4.2 | 4 | 3.8 |
| Ga | 0 | 0 | 0 | 0 | 0 | 0 | 0 | 0 | 0 |
| Si | 8 | 12.4 | 14.5 | 8.5 | 10.8 | 16.9 | 12.5 | 16 | 19.2 |
| Sn | 0 | 0 | 0 | 0 | 0 | 0 | 0 | 0 | 0 |
| Ge | 4 | 3 | 4 | 3 | 4 | 1 | 0 | 0 | 0 |
| In | 0 | 0 | 0 | 0 | 0 | 0 | 0 | 0 | 0 |
| Ag | 0 | 0 | 0 | 0 | 0 | 0 | 0 | 0 | 0 |
| Cl | 0 | 0 | 0 | 0 | 0 | 0 | 0 | 0 | 0 |
| Br | 0 | 0 | 0 | 0 | 0 | 0 | 0 | 0 | 0 |
| I | 0 | 0 | 0 | 0 | 0 | 0 | 0 | 0 | 0 |
| S+Se+Te | 80 | 76.9 | 74.1 | 77 | 74.1 | 71.4 | 83.3 | 80 | 77 |
| Al+Ga | 8 | 7.7 | 7.4 | 11.5 | 11.1 | 10.7 | 4.2 | 4 | 3.8 |
| Si+Sn | 8 | 12.4 | 14.5 | 8.5 | 10.8 | 16.9 | 12.5 | 16 | 19.2 |
| Cl+Br+I | 0 | 0 | 0 | 0 | 0 | 0 | 0 | 0 | 0 |
| S+Se+Te+Al+Ga+Si+Sn | 96 | 97 | 96 | 97 | 96 | 99 | 100 | 100 | 100 |
| (Al+Ga)/(S+Se+Te) | 0.10 | 0.10 | 0.10 | 0.15 | 0.15 | 0.15 | 0.05 | 0.05 | 0.05 |
| (Si+Sn)/(S+Se+Te) | 0.10 | 0.16 | 0.20 | 0.11 | 0.15 | 0.24 | 0.15 | 0.20 | 0.25 |
| Infrared absorption edge wavelength(*µ*m) | 19.0 | 18.3 | 18.7 | 18.2 | 18.2 | 18.9 | 18.9 | 18.3 | 18.8 |
| Refractive index n₁₀ | 3.104 | 3.037 | 2.975 | 3.037 | 2.975 | 2.918 | 3.176 | 3.104 | 3.037 |
| dn/dT (× 10⁻⁶) | 161 | 124 | 124 | 139 | 136 | 87 | 88 | 85 | 82 |

**[Table 5]**

| (atom%) | Example | | | | | | | | |
|---|---|---|---|---|---|---|---|---|---|
| | 37 | 38 | 39 | 40 | 41 | 42 | 43 | 44 | 45 |
| S | 0 | 0 | 0 | 0 | 0 | 0 | 0 | 0 | 0 |
| Se | 0 | 0 | 0 | 0 | 0 | 0 | 0 | 0 | 0 |
| Te | 80 | 76.9 | 74.1 | 77 | 74.1 | 71.4 | 83.3 | 80 | 77 |
| Al | 8 | 7.7 | 7.4 | 11.5 | 11.1 | 10.7 | 4.2 | 4 | 3.8 |
| Ga | 0 | 0 | 0 | 0 | 0 | 0 | 0 | 0 | 0 |
| Si | 12 | 15.4 | 18.5 | 11.5 | 14.8 | 17.9 | 9.5 | 4 | 17.2 |
| Sn | 0 | 0 | 0 | 0 | 0 | 0 | 3 | 12 | 2 |
| Ge | 0 | 0 | 0 | 0 | 0 | 0 | 0 | 0 | 0 |
| In | 0 | 0 | 0 | 0 | 0 | 0 | 0 | 0 | 0 |
| Ag | 0 | 0 | 0 | 0 | 0 | 0 | 0 | 0 | 0 |
| Cl | 0 | 0 | 0 | 0 | 0 | 0 | 0 | 0 | 0 |
| Br | 0 | 0 | 0 | 0 | 0 | 0 | 0 | 0 | 0 |
| I | 0 | 0 | 0 | 0 | 0 | 0 | 0 | 0 | 0 |
| S+Se+Te | 80 | 76.9 | 74.1 | 77 | 74.1 | 71.4 | 83.3 | 80 | 77 |
| Al+Ga | 8 | 7.7 | 7.4 | 11.5 | 11.1 | 10.7 | 4.2 | 4 | 3.8 |
| Si+Sn | 12 | 15.4 | 18.5 | 11.5 | 14.8 | 17.9 | 12.5 | 16 | 19.2 |
| Cl+Br+I | 0 | 0 | 0 | 0 | 0 | 0 | 0 | 0 | 0 |
| S+Se+Te+Al+Ga+Si+Sn | 100 | 100 | 100 | 100 | 100 | 100 | 100 | 100 | 100 |
| (Al+Ga)/(S+Se+Te) | 0.10 | 0.10 | 0.10 | 0.15 | 0.15 | 0.15 | 0.05 | 0.05 | 0.05 |
| (Si+Sn)/(S+Se+Te) | 0.15 | 0.20 | 0.25 | 0.15 | 0.20 | 0.25 | 0.15 | 0.20 | 0.25 |
| Infrared absorption edge wavelength(*µ*m) | 18.4 | 18.4 | 18.3 | 18.5 | 18.6 | 18.4 | 18.9 | 18.7 | 19.0 |
| Refractive index n₁₀ | 3.104 | 3.037 | 2.975 | 3.037 | 2.975 | 2.918 | 3.176 | 3.104 | 3.037 |
| dn/dT (× 10⁻⁶) | 85 | 82 | 79 | 82 | 79 | 76 | 88 | 85 | 82 |

**[Table 6]**

| (atom%) | Example | | | | | | | | |
|---|---|---|---|---|---|---|---|---|---|
| | 46 | 47 | 48 | 49 | 50 | 51 | 52 | 53 | 54 |
| S | 0 | 0 | 0 | 0 | 0 | 0 | 0 | 0 | 0 |
| Se | 0 | 0 | 0 | 0 | 0 | 0 | 0 | 0 | 0 |
| Te | 80 | 76.9 | 74.1 | 77 | 74.1 | 71.4 | 83.3 | 80 | 77 |
| Al | 8 | 7.7 | 7.4 | 11.5 | 11.1 | 10.7 | 0.2 | 0 | 1.8 |
| Ga | 0 | 0 | 0 | 0 | 0 | 0 | 3 | 3 | 1 |
| Si | 0 | 14.4 | 5.5 | 4.5 | 12.8 | 10.9 | 12.5 | 16 | 19.2 |
| Sn | 12 | 1 | 13 | 7 | 2 | 7 | 0 | 0 | 0 |
| Ge | 0 | 0 | 0 | 0 | 0 | 0 | 0 | 0 | 0 |
| In | 0 | 0 | 0 | 0 | 0 | 0 | 1 | 1 | 1 |
| Ag | 0 | 0 | 0 | 0 | 0 | 0 | 0 | 0 | 0 |
| Cl | 0 | 0 | 0 | 0 | 0 | 0 | 0 | 0 | 0 |
| Br | 0 | 0 | 0 | 0 | 0 | 0 | 0 | 0 | 0 |
| I | 0 | 0 | 0 | 0 | 0 | 0 | 0 | 0 | 0 |
| S+Se+Te | 80 | 76.9 | 74.1 | 77 | 74.1 | 71.4 | 83.3 | 80 | 77 |
| Al+Ga | 8 | 7.7 | 7.4 | 11.5 | 11.1 | 10.7 | 3.2 | 3 | 2.8 |
| Si+Sn | 12 | 15.4 | 18.5 | 11.5 | 14.8 | 17.9 | 12.5 | 16 | 19.2 |
| Cl+Br+I | 0 | 0 | 0 | 0 | 0 | 0 | 0 | 0 | 0 |
| S+Se+Te+Al+Ga+Si+Sn | 100 | 100 | 100 | 100 | 100 | 100 | 99 | 99 | 99 |
| (Al+Ga)/(S+Se+Te) | 0.10 | 0.10 | 0.10 | 0.15 | 0.15 | 0.15 | 0.04 | 0.04 | 0.04 |
| (Si+Sn)/(S+Se+Te) | 0.15 | 0.20 | 0.25 | 0.15 | 0.20 | 0.25 | 0.15 | 0.20 | 0.25 |
| Infrared absorption edge wavelength(*µ*m) | 18.2 | 18.1 | 18.7 | 18.2 | 19.0 | 18.7 | 18.5 | 18.2 | 18.8 |
| Refractive index n₁₀ | 3.104 | 3.037 | 2.975 | 3.037 | 2.975 | 2.918 | 3.176 | 3.104 | 3.037 |
| dn/dT (× 10⁻⁶) | 85 | 82 | 79 | 82 | 79 | 76 | 88 | 85 | 82 |

**[Table 7]**

| (atom%) | Example | | | | | | | | |
|---|---|---|---|---|---|---|---|---|---|
| | 55 | 56 | 57 | 58 | 59 | 60 | 61 | 62 | 63 |
| S | 0 | 0 | 0 | 0 | 0 | 0 | 0 | 0 | 0 |
| Se | 0 | 0 | 0 | 0 | 0 | 0 | 0 | 0 | 0 |
| Te | 80 | 76.9 | 74.1 | 77 | 74.1 | 71.4 | 79.2 | 72.6 | 65.8 |
| Al | 1 | 0.7 | 3.4 | 4.5 | 0.1 | 0.7 | 4 | 3.6 | 3.3 |
| Ga | 3 | 4 | 1 | 4 | 8 | 9 | 0 | 0 | 0 |
| Si | 12 | 15.4 | 18.5 | 11.5 | 14.8 | 17.9 | 11.9 | 14.5 | 16.5 |
| Sn | 0 | 0 | 0 | 0 | 0 | 0 | 0 | 0 | 0 |
| Ge | 0 | 0 | 0 | 0 | 0 | 0 | 0 | 0 | 0 |
| In | 4 | 3 | 3 | 3 | 3 | 1 | 0 | 0 | 0 |
| Ag | 0 | 0 | 0 | 0 | 0 | 0 | 2.9 | 1.9 | 4.5 |
| Cl | 0 | 0 | 0 | 0 | 0 | 0 | 2 | 7.4 | 9.9 |
| Br | 0 | 0 | 0 | 0 | 0 | 0 | 0 | 0 | 0 |
| I | 0 | 0 | 0 | 0 | 0 | 0 | 0 | 0 | 0 |
| S+Se+Te | 80 | 76.9 | 74.1 | 77 | 74.1 | 71.4 | 79.2 | 72.6 | 65.8 |
| Al+Ga | 4 | 4.7 | 4.4 | 8.5 | 8.1 | 9.7 | 4 | 3.6 | 3.3 |
| Si+Sn | 12 | 15.4 | 18.5 | 11.5 | 14.8 | 17.9 | 11.9 | 14.5 | 16.5 |
| Cl+Br+I | 0 | 0 | 0 | 0 | 0 | 0 | 2 | 7.4 | 9.9 |
| S+Se+Te+Al+Ga+Si+Sn | 96 | 97 | 97 | 97 | 97 | 99 | 95.1 | 90.7 | 85.6 |
| (Al+Ga)/(S+Se+Te) | 0.05 | 0.06 | 0.06 | 0.11 | 0.11 | 0.14 | 0.05 | 0.05 | 0.05 |
| (Si+Sn)/(S+Se+Te) | 0.15 | 0.20 | 0.25 | 0.15 | 0.20 | 0.25 | 0.15 | 0.20 | 0.25 |
| Infrared absorption edge wavelength(*µ*m) | 18.9 | 18.5 | 18.1 | 18.5 | 18.0 | 18.9 | 18.9 | 18.6 | 18.5 |
| Refractive index n₁₀ | 3.104 | 3.037 | 2.975 | 3.037 | 2.975 | 2.918 | 3.152 | 2.983 | 2.894 |
| dn/dT (× 10⁻⁶) | 85 | 82 | 79 | 82 | 79 | 76 | 84 | 77 | 70 |

**[Table 8]**

| (atom%) | Example | | | | | | | | |
|---|---|---|---|---|---|---|---|---|---|
| | 64 | 65 | 66 | 67 | 68 | 69 | 70 | 71 | 72 |
| S | 0 | 0 | 0 | 0 | 0 | 0 | 0 | 0 | 0 |
| Se | 0 | 0 | 0 | 0 | 0 | 0 | 0 | 0 | 0 |
| Te | 73.2 | 69.3 | 67 | 71.7 | 64.5 | 61.8 | 78.1 | 77.6 | 71.5 |
| Al | 7.3 | 6.9 | 6.7 | 10.8 | 9.7 | 9.3 | 1 | 2 | 2 |
| Ga | 0 | 0 | 0 | 0 | 0 | 0 | 4 | 1.9 | 1.6 |
| Si | 11 | 13.8 | 16.8 | 10.8 | 12.9 | 15.5 | 11.9 | 15.5 | 17.9 |
| Sn | 0 | 0 | 0 | 0 | 0 | 0 | 0 | 0 | 0 |
| Ge | 0 | 0 | 0 | 0 | 0 | 0 | 0 | 0 | 0 |
| In | 0 | 0 | 0 | 0 | 0 | 0 | 0 | 0 | 0 |
| Ag | 2.8 | 0.9 | 3.8 | 1.9 | 4.6 | 2.7 | 5 | 3 | 7 |
| Cl | 0 | 0 | 0 | 0 | 0 | 0 | 0 | 0 | 0 |
| Br | 5.7 | 9.1 | 5.7 | 0 | 0 | 0 | 0 | 0 | 0 |
| I | 0 | 0 | 0 | 4.8 | 8.3 | 10.7 | 0 | 0 | 0 |
| S+Se+Te | 73.2 | 69.3 | 67 | 71.7 | 64.5 | 61.8 | 78.1 | 77.6 | 71.5 |
| Al+Ga | 7.3 | 6.9 | 6.7 | 10.8 | 9.7 | 9.3 | 5 | 3.9 | 3.6 |
| Si+Sn | 11 | 13.8 | 16.8 | 10.8 | 12.9 | 15.5 | 11.9 | 15.5 | 17.9 |
| Cl+Br+I | 5.7 | 9.1 | 5.7 | 4.8 | 8.3 | 10.7 | 0 | 0 | 0 |
| S+Se+Te+Al+Ga+Si+Sn | 91.5 | 90 | 90.5 | 93.3 | 87.1 | 86.6 | 95 | 97 | 93 |
| (Al+Ga)/(S+Se+Te) | 0.10 | 0.10 | 0.10 | 0.15 | 0.15 | 0.15 | 0.05 | 0.05 | 0.05 |
| (Si+Sn)/(S+Se+Te) | 0.15 | 0.20 | 0.25 | 0.15 | 0.20 | 0.25 | 0.15 | 0.20 | 0.25 |
| Infrared absorption edge wavelength(*µ*m) | 18.1 | 18.4 | 18.1 | 18.1 | 19.0 | 18.0 | 18.5 | 18.5 | 18.3 |
| Refractive index n₁₀ | 3.018 | 2.89 | 2.905 | 2.967 | 2.868 | 2.768 | 3.178 | 3.124 | 3.078 |
| dn/dT (× 10⁻⁶) | 78 | 74 | 71 | 76 | 68 | 66 | 83 | 83 | 76 |

**[Table 9]**

| (atom%) | Example | | | | | | | | |
|---|---|---|---|---|---|---|---|---|---|
| | 73 | 74 | 75 | 76 | 77 | 78 | 79 | 80 | 81 |
| S | 0 | 0 | 0 | 0 | 0 | 0 | 0 | 0 | 0 |
| Se | 0 | 0 | 0 | 0 | 0 | 0 | 0 | 0 | 0 |
| Te | 71.1 | 76.6 | 75.2 | 70.7 | 68.9 | 67.8 | 73.7 | 76 | 72.4 |
| Al | 2 | 2 | 1 | 2 | 1 | 4 | 2 | 3 | 2 |
| Ga | 1.6 | 5.7 | 6.5 | 5.1 | 5.9 | 2.8 | 6.7 | 8.4 | 8.8 |
| Si | 21.3 | 7.7 | 11.3 | 14.2 | 17.2 | 20.4 | 13.3 | 7.6 | 10.8 |
| Sn | 0 | 0 | 0 | 0 | 0 | 0 | 0 | 0 | 0 |
| Ge | 0 | 0 | 0 | 0 | 0 | 0 | 0 | 0 | 0 |
| In | 0 | 0 | 0 | 0 | 0 | 0 | 0 | 0 | 0 |
| Ag | 4 | 8 | 6 | 8 | 7 | 5 | 4.3 | 5 | 6 |
| Cl | 0 | 0 | 0 | 0 | 0 | 0 | 0 | 0 | 0 |
| Br | 0 | 0 | 0 | 0 | 0 | 0 | 0 | 0 | 0 |
| I | 0 | 0 | 0 | 0 | 0 | 0 | 0 | 0 | 0 |
| S+Se+Te | 71.1 | 76.6 | 75.2 | 70.7 | 68.9 | 67.8 | 73.7 | 76 | 72.4 |
| Al+Ga | 3.6 | 7.7 | 7.5 | 7.1 | 6.9 | 6.8 | 8.7 | 11.4 | 10.8 |
| Si+Sn | 21.3 | 7.7 | 11.3 | 14.2 | 17.2 | 20.4 | 13.3 | 7.6 | 10.8 |
| Cl+Br+I | 0 | 0 | 0 | 0 | 0 | 0 | 0 | 0 | 0 |
| S+Se+Te+Al+Ga+Si+Sn | 96 | 92 | 94 | 92 | 93 | 95 | 95.7 | 95 | 94 |
| (Al+Ga)/(S+Se+Te) | 0.05 | 0.10 | 0.10 | 0.10 | 0.10 | 0.10 | 0.12 | 0.15 | 0.15 |
| (Si+Sn)/(S+Se+Te) | 0.30 | 0.10 | 0.15 | 0.20 | 0.25 | 0.30 | 0.18 | 0.10 | 0.15 |
| Infrared absorption edge wavelength(*µ*m) | 18.5 | 18.6 | 18.6 | 18.5 | 18.2 | 18.7 | 18.3 | 18.7 | 18.8 |
| Refractive index n₁₀ | 3.004 | 3.211 | 3.137 | 3.082 | 3.021 | 2.954 | 3.067 | 3.132 | 3.076 |
| dn/dT (×10⁻⁶) | 76 | 82 | 80 | 75 | 73 | 72 | 79 | 81 | 77 |

**[Table 10]**

| (atom%) | Example | | | | | | | | |
|---|---|---|---|---|---|---|---|---|---|
| | 82 | 83 | 84 | 85 | 86 | 87 | 88 | 89 | 90 |
| S | 0 | 0 | 0 | 0 | 0 | 0 | 0 | 0 | 0 |
| Se | 0 | 0 | 0 | 0 | 0 | 0 | 0 | 0 | 0 |
| Te | 68.9 | 69.3 | 65.5 | 71.2 | 68.9 | 66.4 | 74 | 73 | 75 |
| Al | 4 | 4 | 4 | 2 | 2 | 3 | 1 | 2 | 1 |
| Ga | 6.3 | 6.4 | 5.8 | 11.6 | 11.8 | 10.3 | 12 | 7 | 10.5 |
| Si | 13.8 | 17.3 | 19.7 | 8.4 | 10.3 | 13.3 | 9 | 9 | 13.5 |
| Sn | 0 | 0 | 0 | 0 | 0 | 0 | 0 | 0 | 0 |
| Ge | 0 | 0 | 0 | 0 | 0 | 0 | 1 | 4 | 0 |
| In | 0 | 0 | 0 | 0 | 0 | 0 | 0 | 0 | 0 |
| Ag | 7 | 3 | 5 | 6.8 | 7 | 7 | 3 | 5 | 0 |
| Cl | 0 | 0 | 0 | 0 | 0 | 0 | 0 | 0 | 0 |
| Br | 0 | 0 | 0 | 0 | 0 | 0 | 0 | 0 | 0 |
| I | 0 | 0 | 0 | 0 | 0 | 0 | 0 | 0 | 0 |
| S+Se+Te | 68.9 | 69.3 | 65.5 | 71.2 | 68.9 | 66.4 | 74 | 73 | 75 |
| Al+Ga | 10.3 | 10.4 | 9.8 | 13.6 | 13.8 | 13.3 | 13 | 9 | 11.5 |
| Si+Sn | 13.8 | 17.3 | 19.7 | 8.4 | 10.3 | 13.3 | 9 | 9 | 13.5 |
| Cl+Br+I | 0 | 0 | 0 | 0 | 0 | 0 | 0 | 0 | 0 |
| S+Se+Te+Al+Ga+Si+Sn | 93 | 97 | 95 | 93.2 | 93 | 93 | 96 | 91 | 100 |
| (Al+Ga)/(S+Se+Te) | 0.15 | 0.15 | 0.15 | 0.19 | 0.20 | 0.20 | 0.18 | 0.12 | 0.15 |
| (Si+Sn)/(S+Se+Te) | 0.20 | 0.25 | 0.30 | 0.12 | 0.15 | 0.20 | 0.12 | 0.12 | 0.18 |
| Infrared absorption edge wavelength(*µ*m) | 18 | 18.8 | 18.3 | 18.3 | 18.5 | 19 | 18.9 | 18.4 | 18.1 |
| Refractive index n₁₀ | 3.021 | 2.943 | 2.904 | 3.067 | 3.021 | 2.967 | 3.045 | 3.067 | 3.002 |
| dn/dT (×10⁻⁶) | 73 | 74 | 70 | 76 | 73 | 71 | 79 | 78 | 80 |

**[Table 11]**

| (atom%) | Example | | | | | | | | |
|---|---|---|---|---|---|---|---|---|---|
| | 91 | 92 | 93 | 94 | 95 | 96 | 97 | 98 | 99 |
| S | 0 | 0 | 0 | 0 | 0 | 0 | 0 | 0 | 0 |
| Se | 0 | 0 | 0 | 0 | 0 | 0 | 0 | 0 | 0 |
| Te | 73.5 | 75 | 71 | 72 | 75.5 | 73 | 74 | 75 | 73 |
| Al | 2 | 1 | 2 | 1.5 | 1 | 1 | 2 | 1 | 2 |
| Ga | 11.5 | 6.5 | 8.5 | 8.5 | 6.5 | 8 | 6 | 9 | 8 |
| Si | 13 | 10.5 | 8.5 | 12 | 9 | 11 | 9 | 8 | 9 |
| Sn | 0 | 2 | 4 | 0 | 0 | 0 | 0 | 0 | 0 |
| Ge | 0 | 0 | 0 | 0 | 0 | 0 | 0 | 0 | 0 |
| In | 0 | 0 | 0 | 1 | 4 | 0 | 0 | 0 | 0 |
| Ag | 0 | 5 | 6 | 5 | 4 | 5 | 4 | 4 | 4 |
| Cl | 0 | 0 | 0 | 0 | 0 | 2 | 5 | 0 | 0 |
| Br | 0 | 0 | 0 | 0 | 0 | 0 | 0 | 3 | 4 |
| I | 0 | 0 | 0 | 0 | 0 | 0 | 0 | 0 | 0 |
| S+Se+Te | 73.5 | 75 | 71 | 72 | 75.5 | 73 | 74 | 75 | 73 |
| Al+Ga | 13.5 | 7.5 | 10.5 | 10 | 7.5 | 9 | 8 | 10 | 10 |
| Si+Sn | 13 | 12.5 | 12.5 | 12 | 9 | 11 | 9 | 8 | 9 |
| Cl+Br+I | 0 | 0 | 0 | 0 | 0 | 2 | 5 | 3 | 4 |
| S+Se+Te+Al+Ga+Si+Sn | 100 | 95 | 94 | 94 | 92 | 93 | 91 | 93 | 92 |
| (Al+Ga)/(S+Se+Te) | 0.18 | 0.10 | 0.15 | 0.14 | 0.10 | 0.12 | 0.11 | 0.13 | 0.14 |
| (Si+Sn)/(S+Se+Te) | 0.18 | 0.17 | 0.18 | 0.17 | 0.12 | 0.15 | 0.12 | 0.11 | 0.12 |
| Infrared absorption edge wavelength(*µ*m) | 18.5 | 18.9 | 18.2 | 18.6 | 18.5 | 18.5 | 18.6 | 18.7 | 18.3 |
| Refractive index n₁₀ | 2.969 | 3.111 | 3.045 | 3.045 | 3.1 | 3.067 | 3.067 | 3.089 | 3.045 |
| dn/dT (×10⁻⁶) | 78 | 80 | 76 | 77 | 81 | 78 | 79 | 80 | 78 |

**[Table 12]**

| (atom%) | Example | | | |
|---|---|---|---|---|
| | 100 | 101 | 102 | 103 |
| S | 0 | 0 | 0 | 0 |
| Se | 0 | 0 | 0 | 0 |
| Te | 72 | 71 | 75.2 | 72.7 |
| Al | 1 | 2 | 0 | 0 |
| Ga | 10 | 7 | 6.8 | 11.8 |
| Si | 9 | 8 | 13.6 | 8.6 |
| Sn | 0 | 0 | 0 | 0 |
| Ge | 0 | 0 | 0 | 0 |
| In | 0 | 0 | 0 | 0 |
| Ag | 4 | 4 | 4.4 | 6.9 |
| Cl | 0 | 0 | 0 | 0 |
| Br | 0 | 0 | 0 | 0 |
| I | 4 | 8 | 0 | 0 |
| S+Se+Te | 72 | 71 | 75.2 | 72.7 |
| Al+Ga | 11 | 9 | 6.8 | 11.8 |
| Si+Sn | 9 | 8 | 13.6 | 8.6 |
| Cl+Br+I | 4 | 8 | 0 | 0 |
| S+Se+Te+Al+Ga+Si+Sn | 92 | 88 | 95.6 | 93.1 |
| (Al+Ga)/(S+Se+Te) | 0.15 | 0.13 | 0.09 | 0.16 |
| (Si+Sn)/(S+Se+Te) | 0.13 | 0.11 | 0.18 | 0.12 |
| Infrared absorption edge wavelength(µm) | 18.9 | 18 | 18.3 | 18.3 |
| Refractive index n₁₀ | 3.024 | 3.002 | 3.102 | 3.102 |
| dn/dT (×10⁻⁶) | 77 | 76 | 80 | 78 |

Examples were produced as follows. First, a quartz glass ampoule was evacuated while being heated. Then, raw materials were prepared so as to have glass compositions shown in Tables 1 to 12, and put into the quartz glass ampoule. Next, the quartz glass ampoule was sealed with an oxygen burner. Next, the sealed quartz glass ampoule was placed in a melting furnace, heated from 650°C to 1000°C at a rate of 10°C to 40°C/hour, and then held for 6 hours to 12 hours. During the holding time, the quartz glass ampoule was turned upside down and the melt was stirred. Finally, the quartz glass ampoule was taken out of the melting furnace and rapidly cooled to room temperature to obtain a sample. The refractive index and infrared absorption edge wavelength of the obtained sample were determined.

A refractive index n₁₀ at 25°C and a wavelength of 10 µm was determined using a refractometer (infrared spectral refractometer manufactured by Bunkoukeiki Co., Ltd.). In addition, a refractive index at -40 to 80°C was measured, and the temperature coefficient dn/dT of the refractive index was obtained.

Using a sample having a thickness of 2 mmt, a light transmittance in an infrared region was measured using a Fourier transform infrared spectrophotometer (Frontier manufactured by PerkinElmer) to determine an infrared absorption edge wavelength. The infrared absorption edge wavelength was taken as a wavelength on the longest wavelength side at which a light transmittance was 10% with a sample thickness of 2 mm in an infrared region having a wavelength of 1 µm or more.

As is apparent from Tables 1 to 12, in Examples 1 to 103, the infrared absorption edge wavelength was 18 µm or more, which was high, and the refractive index n₁₀ was 2.768 or more, which was high. In addition, the temperature coefficient dn/dT of the refractive index was 165×10⁻⁶ or less, which was low.

### INDUSTRIAL APPLICABILITY

The infrared transmissive glass of the present invention can be suitably used for an optical element such as a filter or a lens used for an infrared sensor, an infrared camera, or the like.

## Claims

1. An infrared transmissive glass comprising, in atom%: 50% to 90% of S + Se + Te; 0.1% to 49.9% of Al + Ga; 0.1% to 49.9% of Si + Sn; 0% to 50% of S; 0% to 25% of Se; and 0% to less than 5% of Ge.

2. The infrared transmissive glass according to claim 1, comprising, in atom%, 20% or more of Te.

3. An infrared transmissive glass comprising, in atom%: 50% to 90% of Te; 0.1% to 49.9% of Al + Ga; 0.1% to 49.9% of Si + Sn; 0% to 50% of S; 0% to 25% of Se; and 0% to less than 5% of Ge.

4. The infrared transmissive glass according to any one of claims 1 to 3, comprising, in atom%, 0.1% to less than 15% of Al.

5. The infrared transmissive glass according to any one of claims 1 to 3, comprising, in atom%, 0.1% to 49.9% of Si.

6. The infrared transmissive glass according to any one of claims 1 to 3, comprising, in atom%, 0% to 40% of Ag.

7. The infrared transmissive glass according to any one of claims 1 to 3, comprising, in atom%, 0% to 40% of Cl + Br + I.

8. The infrared transmissive glass according to any one of claims 1 to 3, wherein (Al + Ga)/(S + Se + Te) is 0.01 to less than 1.

9. The infrared transmissive glass according to any one of claims 1 to 3, wherein (Si + Sn)/(S + Se + Te) is 0.01 to less than 1.

10. An optical element comprising the infrared transmissive glass according to any one of claims 1 to 3.

11. An infrared camera comprising the optical element according to claim 10.
